# EUROPEAN PATENT APPLICATION

(11) **EP 4 835 660 A1**
(43) Date of publication of application: **04.11.2026**
(21) Application number: 24910161.9
(22) Date of filing: 15.10.2024
(51) Int. Cl.: G06F 9/455

(54) **VIRTUALIZATION PROCESSING METHOD, DEVICE AND STORAGE MEDIUM**

(30) Priority: 28.12.2023 CN 202311853122
(71) Applicant: Cloud Intelligence Assets Holding (Singapore) Private Limited, Singapore 189554 (SG)
(72) Inventor: ZHENG, Hao, Hangzhou, Zhejiang 310024 (CN); XU, Yun, Hangzhou, Zhejiang 310024 (CN)
(74) Representative: Novagraaf Technologies
(86) International application number: PCT/CN2024/125028
(87) International publication number: WO 2025/139219

(57) **Abstract**

Embodiments of the present disclosure provide a virtualization processing method, a device, and a storage medium. **In** the embodiments of the present disclosure, for a host operating system in a running state, two running modes, that are a root mode and a non-root mode, are provided. A virtualization layer is inserted between hardware resources and the host operating system, and a virtual resource providing function is at least implemented in the virtualization layer. The virtualization layer switches the host operating system from the root mode to the non-root mode, provides at least one virtual resource in the non-root mode, and at least runs, on the at least one virtual resource, an application that is unable to run in the host operating system in the root mode due to insufficient resources. When the host operating system does not need to be reinstalled, the virtual resource providing function is flexibly implemented for the host operating system in the running state, to support running of more applications, and expand a capability of the host operating system.

## Description

### TECHNICAL FIELD

The present disclosure relates to the field of virtualization technologies, and in particular, to a virtualization processing method, a device, and a storage medium.

### BACKGROUND OF THE INVENTION

An operating system (OS), as basic system software of a computer device, provides various system-level functions, such as memory swap. The memory swap is an extension mechanism that uses an idle hard disk space as a memory space. When a physical page in a main memory is insufficient, some memory pages that are not commonly used are swapped to a hard disk. When a process uses these memory pages again, the memory pages are swapped from the hard disk to the main memory.

Some system functions represented by a memory swap function need to be configured during installation of the operating system. When the system functions are not configured during the installation of the operating system, the operating system cannot use the system functions for providing a resource for an application during running, leading to that the application relying on the system functions abnormally runs or cannot run. An existing operating system that has already run without a related configured system function faces a technical problem about how to implement capability expansion.

### SUMMARY OF THE INVENTION

Various aspects of the present disclosure provide a virtualization processing method, a device, and a storage medium, to solve a capability expansion problem of an existing operating system that has already run without a related configured function and to support running of more applications.

Embodiments of the present disclosure further provide a physical machine. The physical machine includes hardware resources and a host operating system that runs on the hardware resources. A virtualization layer is implemented between the hardware resources and the host operating system. The virtualization layer is configured to switch the host operating system from a root mode to a non-root mode, provide at least one virtual resource in the non-root mode, and run at least one application on the at least one virtual resource. The at least one application at least includes an application that is unable to run in the host operating system in the root mode due to insufficient resources.

Embodiments of the present disclosure further provide a virtualization processing method, applied to a virtualization layer in a physical machine. The virtualization layer is located between hardware resources of the physical machine and a host operating system. The virtualization processing method includes the following steps. The host operating system is switched from a root mode to a non-root mode. At least one virtual resource in the non-root mode is provided, and at least one application is run on the at least one virtual resource. The at least one application at least includes an application that is unable to run in the host operating system in the root mode due to insufficient resources.

Embodiments of the present disclosure further provide a computer-readable storage medium storing a computer program. The computer program, when executed by a processor, causes the processor to implement the steps of the virtualization processing method provided in the embodiments of the present disclosure.

In the embodiments of the present disclosure, for the host operating system in the running state, two running modes, that are a root mode and a non-root mode, are provided. The virtualization layer is inserted between the hardware resources and the host operating system, and a virtual resource providing function is at least implemented in the virtualization layer. The virtualization layer switches the host operating system from the root mode to the non-root mode, provides at least one virtual resource in the non-root mode, and runs, on the at least one virtual resource, at least one application that is unable to run in the host operating system in the root mode due to insufficient resources. When the host operating system does not need to be reinstalled, the virtual resource providing function is flexibly implemented for the host operating system in the running state, to support running of more applications, and expand a capability of the host operating system.

### BRIEF DESCRIPTION OF DRAWINGS

The accompanying drawings described herein are used for providing a further understanding of the present disclosure and constitute a part of the present disclosure. Exemplary embodiments of the present disclosure and descriptions thereof are used for explaining the present disclosure, and do not constitute any inappropriate limitation on the present disclosure. In the accompanying drawings:
FIG. 1a is a structural schematic diagram of a physical machine according to some exemplary embodiments of the present disclosure.
FIG. 1b is a structural schematic diagram of another physical machine according to some exemplary embodiments of the present disclosure.
FIG. 1c is a system structural diagram of the physical machine shown in FIG. 1b operating in a root mode according to some exemplary embodiments of the present disclosure.
FIG. 1d is a system structural diagram of the physical machine shown in FIG. 1b operating in a non-root mode according to some exemplary embodiments of the present disclosure.
FIG. 2a is a schematic flowchart of switching a host operating system from a root mode to a non-root mode according to some exemplary embodiments of the present disclosure.
FIG. 2b is a schematic flowchart of creating an extended page table according to some exemplary embodiments of the present disclosure.
FIG. 2c is a schematic flowchart of creating an information bearing object according to some exemplary embodiments of the present disclosure.
FIG. 2d is a schematic flowchart of mode switching according to some exemplary embodiments of the present disclosure.
FIG. 3 is a schematic flowchart of a virtualization processing method according to some exemplary embodiments of the present disclosure.
FIG. 4 is a structural schematic diagram of a virtualization processing apparatus according to some exemplary embodiments of the present disclosure.

### DETAILED DESCRIPTION OF THE INVENTION

To make objectives, technical solutions, and advantages of the present disclosure clearer, the technical solutions of the present disclosure are clearly and completely described below with reference to specific embodiments of the present disclosure and corresponding accompanying drawings. Apparently, the described embodiments are some of the embodiments of the present disclosure, but not all of the embodiments. All other embodiments obtained by a person having ordinary skill in the art based on the embodiments of the present disclosure without creative efforts fall within the protection scope of the present disclosure.

It is noted that user information (including but not limited to user equipment information, user personal information, and the like) and data (including but not limited to data for analysis, stored data, displayed data, and the like) involved in the present disclosure are all authorized by the user or information and data fully authorized by all parties. The collection, use, and processing of relevant data need to conform to relevant laws, regulations, and standards of relevant countries and regions, and corresponding operation portals are provided for the user to choose to authorize or refuse.

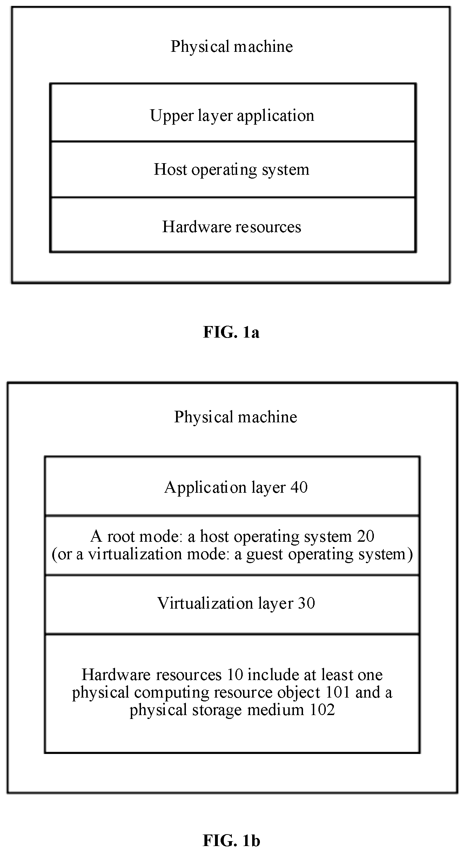

In the embodiments of the present disclosure, as shown in FIG. 1a, a host includes hardware resources. A host operating system (host OS) runs on the hardware resources. Various applications run on the host operating system. Relative to the hardware resources, the host operating system and the applications belong to software resources of the host. The host operating system is most basic system software in the host, which is responsible for controlling and managing hardware resources and software resources of the entire host, and properly schedules operating and resource allocation of the host, and provides a convenient interface and environment for a user and other software or devices. The host operating system provides various system functions, for example, file management, memory management, and various input/output (IO) device management. Based on these system functions, the host operating system provides various resources required for an application in a running process, to support running of the application.

In these system functions, at least some system functions need to be configured when the host operating system is installed, for example, whether they are enabled and which modes are enabled. A system function that is not enabled cannot be used in a running process of the host operating system. Since the system function cannot be used, an application relying on the system function runs abnormally or cannot run because the application fails to obtain resources provided by the system function. However, with the running of the host operating system and a change in application requirements, these system functions that have not been enabled need to be used, or system functions that have been enabled need to be upgraded. To be specific, the host operating system faces a capability expansion problem. For a conventional host, the host operating system is reinstalled, or some system functions are forcibly enabled online. For a manner of reinstalling the host operating system, running of all applications needs to be interrupted, enabling low efficiency and high costs. For a manner of forcibly enabling a corresponding system function online, system stability is seriously affected.

In the embodiments of the present disclosure, to resolve the capability expansion problem faced by the host operating system without reinstalling the host operating system and affecting running performance of the host operating system, a new physical machine architecture is provided. For a host operating system in a running state, two running modes, that are a root mode and a non-root mode, are provided. A virtualization layer is inserted between hardware resources and the host operating system. At least a virtual resource providing function is implemented in the virtualization layer. Through the virtualization layer, the host operating system is switched from the root mode to the non-root mode. In the non-root mode, at least one virtual resource is provided, and at least one application that is unable to run in the host operating system in the root mode due to insufficient resources runs on the at least one virtual resource. Without the need to reinstall an operating system, a virtual resource providing function is flexibly implemented for the host operating system in the running state, resolving a problem that an application cannot be run due to insufficient resources because of a reason that a system function is not enabled or missing, or the like, supporting running of more applications, and helping extension of a capability of the host operating system.

For example, assuming that a host operating system supports a function A, a function B, a function C, a function D, and the like, when the host operating system is installed, the function A, the function B, and the function C are enabled, the function D is not enabled, and a function E is missing (to be specific, the host operating system does not support the function E). By using the physical machine provided in the embodiments of the present disclosure, a virtualization layer is inserted between the hardware resources and the host operating system, and the virtual resource providing function is at least implemented in the virtualization layer. For example, for the function D that is not enabled and the function E that is missing in the host operating system, the virtualization layer switches the host operating system from the root mode to the non-root mode and provides virtual resources corresponding to the function D and the function E in the non-root mode, so as to run, on the virtual resources, an application that originally cannot be run because the function D is not enabled and the function E is missing.

Without the need to reinstall the host operating system, the virtual resource providing function is flexibly implemented for the host operating system in the running mode, resolving a problem that a corresponding application cannot be run because the function D is not enabled and the function E is missing, and helping extension of a capability of the host operating system. Further, to make up for a shortcoming of the host operating system, virtual resources corresponding to the function D and the function E are preferentially provided in the non-root mode to resolve a running problem of an application relying on the function D and the function E. Certainly, for compatibility of the host operating system and avoiding frequent switching of modes, virtual resources corresponding to the function A, the function B, the function C, and the like are also provided in the non-root mode, to facilitate running of corresponding applications relying on the function A, the function B, and the function C on these resources.

It is described herein that in the embodiments of the present disclosure, a process of switching the host operating system between the two modes is focused. As for virtual resources provided in the non-root mode corresponding to system functions and a manner to provide the virtual resources corresponding to these system functions, no restrictions are imposed. The following describes in detail, with reference to the accompanying drawings, the physical machine architecture and the process in which the host operating system switches from the root mode to the non-root mode according to the embodiments of the present disclosure.

FIG. 1b is a structural schematic diagram of another physical machine according to some exemplary embodiments of the present disclosure. As shown in FIG. 1b, the physical machine includes hardware resources 10 and a host operating system 20 that runs on the hardware resource, and a virtualization layer 30 is implemented between the hardware resources 10 and the host operating system 20. Further, an application layer 40 is further included above the host operating system 20. Various applications are included in the application layer 40.

Optionally, the hardware resources 10 include at least one physical computing resource object 101 and a physical storage medium 102, and the physical storage medium 102 is responsible for providing a physical address space. In addition, the hardware resources 10 in the physical machine further include other components such as an IO device, a communication component, a display, a power supply component, and an audio component, which are not shown in the figure.

A physical computing resource object 101 is various physical resource objects having a computing capability, such as a central processing unit (CPU), a graphics processing unit (GPU), a data processing unit (DPU), a tensor processing unit (TPU), a cloud infrastructure processing unit (CIPU), and an application specific integrated circuit (ASIC). The host operating system 20 runs on at least one physical computing resource object 101.

The physical storage medium 102 includes permanent storage medium and non-permanent storage medium, removable media and non-removable media, and implements information storage through any method or technology. The information is a computer-readable instruction, a data structure, a program module, or other data. The physical storage medium 102 includes, but is not limited to, a phase-change memory (PRAM), a static random access memory (SRAM), a dynamic random access memory (DRAM), other type of random access memory (RAM), a read-only memory (ROM), an electrically erasable programmable read-only memory (EEPROM), a flash memory or other memory technology, a compact disc read-only memory (CD-ROM), a digital versatile disc (DVD) or another optical storage, a magnetic cassette tape, a magnetic cassette, a magnetic disk memory or another magnetic storage device, or any other non-transmission medium, and is configured to store information accessible by a computing device.

A physical memory is a memory chip or module actually existing in a physical machine and is configured to store data and program code. The physical memory includes a non-permanent memory in the physical storage medium 102, a random access memory (RAM), and/or a non-volatile memory, for example, a read-only memory (ROM) or a flash memory (flash RAM).

The physical address space is an address range corresponding to the physical memory. The physical address space is related to a hardware architecture and a host operating system, and describes a physical location and a size of an actual memory bank. In a virtual memory system, the physical address space is further related to mechanisms such as an extended page table. The extended page table mechanism is used for implementing mapping from a guest physical address to a host physical address.

In some embodiments, the host operating system 20 correspondingly has a root mode and a non-root mode. The root mode is an operating mode in which the host operating system 20 has a direct access permission to the hardware resources 10. The non-root mode is an operating mode in which the virtualization layer 30 virtualizes the hardware resources 10 and replaces the host operating system 20 to invoke and access a virtualized resource. In the non-root mode, the virtualization layer 30 is limited in accessing the hardware resources 10. Correspondingly, the host operating system 20 in the non-root mode is also referred to as a guest operating system.

In some embodiments, a lightweight, powerful, and highly efficient virtualization layer 30 is inserted between the hardware resources 10 and the host operating system 20. The virtualization layer 30 is pre-developed and inserted between the hardware resources 10 and the host operating system 20. A manner in which the virtualization layer 30 is inserted is not limited. For example, the virtualization layer 30 is inserted when the host operating system 20 is in a normal running state after the host operating system 20 is installed on the physical machine.

The virtualization layer 30 has a virtual resources providing capability and at least provides a virtual resource corresponding to a resource that cannot be provided by the host operating system 20 in the root mode due to system functions that are not enabled or that are missing. To be specific, for the resource that cannot be provided by the host operating system 20 in the root mode due to the system functions that are not enabled or that are missing, the virtualization layer 30 provides the corresponding virtual resource to facilitate running of a corresponding application. Specifically, the virtualization layer 30 switches the host operating system 20 from the root mode to the non-root mode, provides at least one virtual resource in the non-root mode, and runs at least one application on the at least one virtual resource. Without the need to reinstall the operating system, a virtual resource providing function is flexibly implemented for the host operating system in the running state, to resolve a problem that a corresponding resource cannot be provided by the host operating system 20 in the root mode to run a corresponding application due to system functions that are not enabled or that are missing, so that running of more applications are supported, helping extension of a capability of the host operating system. Further, considering compatibility of a host operating system, frequent mode switching for a host operating system is reduced. In the non-root mode, not only a corresponding virtual resource is provided for the system functions of the host operating system 20 that are not enabled or missing in the root mode, but also a corresponding virtual resource is provided for the system functions of the host operating system 20 that are enabled in the root mode to implement support for more functions of the host operating system 20.

For example, at least one target function implemented in the virtualization layer 30 includes, but is not limited to, a memory management function, a file management function, a virtualization function, a scheduling optimization function, or the like. The memory management function, the file management function, the scheduling optimization function, or the like herein is a newly extended function that is not supported by the host operating system, or is a function that is originally supported by the host operating system, but is not enabled in a process in which the host operating system is installed. Regardless of the newly extended function or the function that is not enabled, the memory management function specifically includes, but is not limited to, memory page fault management, memory swap management, memory mapping management, and the like. The file management function specifically includes, but is not limited to, directory management, permission management, a file backup, file creation, a file query, file deletion, file modification, and the like. The virtualization function includes, but is not limited to, virtualization of various flexible resources (such as a CPU, a GPU, a memory, and a network). The scheduling optimization function includes, but is not limited to, scheduling of a physical computing resource object, scheduling of various virtualization resources, and the like.

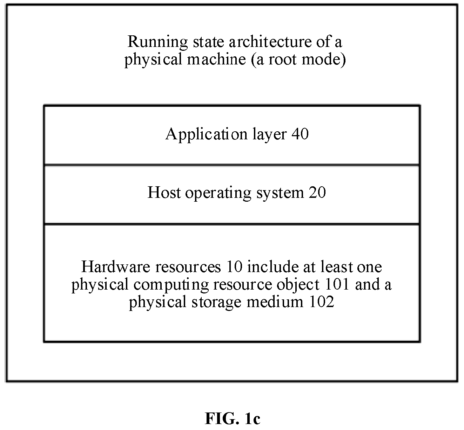

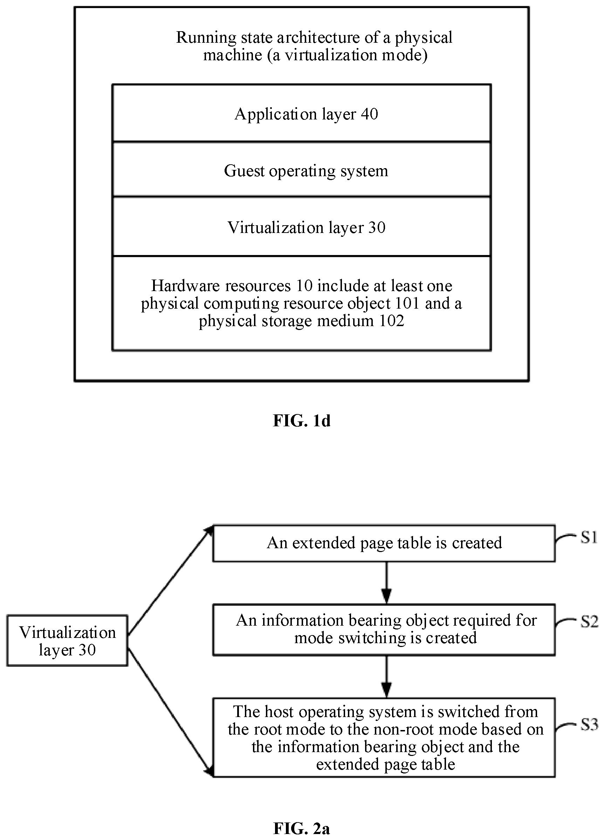

Further, FIG. 1b is a schematic diagram of an overall architecture of a physical machine. Relative to FIG. 1b, FIG. 1c and FIG. 1d show internal architectures of a physical machine operating in a root mode and a non-root mode. Before mode switching is performed, a host operating system operates in the root mode. In the root mode, as shown in FIG. 1c, an internal architecture of a running physical machine includes, from bottom to top, hardware resources 10, a host operating system 20, and an application layer 40. After mode switching is performed, the host operating system operates in the non-root mode. In the non-root mode, as shown in FIG. 1d, the architecture of the running physical machine includes, from bottom to top, the hardware resources 10, a virtualization layer 30, a guest operating system, and the application layer 40. The guest operating system refers to the host operating system 20 running in the non-root mode.

In the embodiments of the present disclosure, for a host operating system in a running state, two running modes, that are a root mode and a non-root mode, are provided. A virtualization layer is inserted between hardware resources and the host operating system, and a virtual resource providing function is implemented at least in the virtualization layer. The virtualization layer switches the host operating system from the root mode to the non-root mode, provides at least one virtual resource in the non-root mode, and runs, on the at least one virtual resource, at least one application that is unable to run in the host operating system in the root mode due to insufficient resources. When the host operating system does not need to be reinstalled, the virtual resource providing function is flexibly implemented for the host operating system in the running state, to support running of more applications, and expand a capability of the host operating system.

It is described herein that from perspective of program code, implementation code for "the virtual resource providing function", "switching he host operating system from the root mode to the non-root mode", and the like involved in the embodiments of the present disclosure belongs to the virtualization layer 30. These pieces of code are located under the host operating system. However, from perspective of a running state, before mode switching is actually completed, at least some pieces of program code in the virtualization layer 30 is executed in a running process of the host operating system. In other words, at least some pieces of program code in the virtualization layer 30 are executed in the root mode. The program code executed in the root mode in the virtualization layer 30 at least includes program code used for switching from the root mode to the non-root mode, for example, a top half of a switching function mentioned in the following embodiments. Correspondingly, after the mode switching is actually completed, some pieces of program code are executed in the non-root mode, for example, a bottom half of the switching function mentioned in the following embodiments. In addition, program code in the virtualization layer 30 that is responsible for providing virtual resources also runs in the root mode, but this program code is run after the switching is completed. The virtualization layer 30 further provides some pieces of interface code externally. A part of these pieces of the interface code runs in the non-root mode, and another part of these pieces of the interface code needs to run under switching to the root mode, which is specifically determined based on a function of the interface code.

In some optional embodiments, as shown in FIG. 2a, switching, by the virtualization layer 30, the host operating system from the root mode to the non-root mode includes three pieces of content.

In step S1, an extended page table is created to store a mapping relationship between a guest physical address in the non-root mode and the host physical address in the root mode.

In step S2, an information bearing object required for mode switching is created, where the information bearing object is used for synchronizing context information between the root mode and the non-root mode.

In step S3, the host operating system is switched from the root mode to the non-root mode based on the information bearing object and the extended page table.

Detailed implementation of the three pieces of the content is described below.

In step S1, an extended page table is created.

A physical address space in the root mode has a host physical address. The host physical address is represented through a Host Physical Address (HPA), and the host physical address is an address of a physical memory in a physical memory resource. In the non-root mode, the physical address space corresponds to a virtual address space, the virtual address space has a guest physical address, the guest physical address is represented through a Guest Physical Address (GPA), and the guest physical address is an address of a virtual memory in a virtual memory resource.

In some embodiments, the virtualization layer 30 creates the extended page table. The extended page table is used for storing a mapping relationship between the guest physical address in the non-root mode and the host physical address in the root mode. The extended page table is represented through an Extended Page Table (EPT). It is noted that when the extended page table is initially created, because the host operating system has not run in the non-root mode and has not performed an operation such as memory reclamation or memory swap, the guest physical address in the non-root mode is the same as the host physical address in the root mode. Subsequently, after being used by the host operating system in the non-root mode, for example, memory reclamation or memory swap, the guest physical address is no longer equal to the host physical address, and the extended page table dynamically maintains a mapping relationship between the guest physical address and the host physical address.

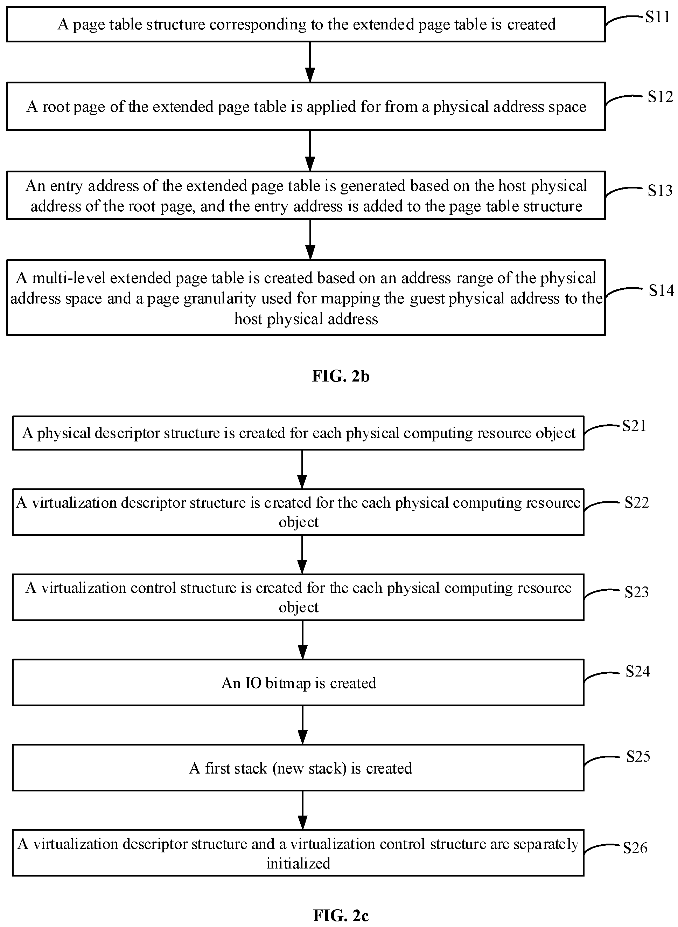

In some optional embodiments, as shown in FIG. 2b, a process in which an extended page table is created includes the following steps. In step S11, a page table structure corresponding to the extended page table is created. In step S12, a root page of the extended page table is applied for from a physical address space. In step S13, an entry address of the extended page table is generated based on the host physical address of the root page, and the entry address is added to the page table structure. In step S14, a multi-level extended page table is created based on an address range of the physical address space and a page granularity used for mapping the guest physical address to the host physical address.

First, the page table structure is created. The page table structure is used for storing various information related to the extended page table, for example, storing an entry address of the extended page table, an address lock array for operating the extended page table, and an address of a special advanced programmable interrupt controller (APIC) page. The entry address of the extended page table is used for accessing the extended page table. For example, the entry address is a head address of the extended page table. Each entry in the address lock array corresponds to one page table entry and includes one lock flag bit, used for indicating whether the entry is locked. When it is not locked, a process accesses a memory space corresponding to the page table entry. The address of the special APIC page is mainly used for accessing the special APIC page. After the page table structure is created, a physical page is applied for from a physical address space provided by a physical storage medium to serve as a root page of the extended page table, and the entry address of the extended page table is generated based on the host physical address of the root page, and the entry address of the extended page table is added to the page table structure. A form of the entry address of the extended page table varies based on types of physical computing resource objects and manufacturers. For example, the host physical address of the root page is directly used as the entry address of the extended page table. For another example, the host physical address of the root page plus a set offset or a flag bit is used as the entry address of the extended page table, which is not limited.

The physical address space has an address range. For example, the address range of the physical address space is 0 to 8 G, 0 to 16 G, or the like. In addition, in some embodiments, in the non-root mode, a single page granularity supported by the host operating system is broken, and it is allowed to set a page granularity for establishing address mapping as required. For example, the page granularity for address mapping includes, but is not limited to, 4 K (Kilobyte), 2 M (Megabyte), or 1 G (Gigabyte), or the like. In view of the above, in some optional embodiments, the virtualization layer 30 creates a multi-level extended page table based on the address range of the physical address space and the page granularity used for mapping the guest physical address to the host physical address. The multi-level extended page table is a 2-level extended page table, a 4-level extended page table, a 5-level extended page table, or the like, and is specifically determined based on the address range of the physical address space and the page granularity. For example, for the same address range, a smaller page granularity indicates more required extended page table levels. For another example, for the same page granularity, a larger address range indicates more required extended page table levels.

Optionally, in some embodiments, the physical address space is divided into a first address space and a second address space. The second address space is larger than the first address space. To be specific, an address size of the second address space is larger than an address size of the first address space. For example, when a size of the physical address space is 8 G, the address ranges of the physical address space are divided into 0 G to 4 G and 4 G to 8 G, the first address space is an address space corresponding to 0 G to 4 G, and the second address space is an address space above 4 G. For another example, when the size of the physical address space is 16 G, the address ranges of the physical address space are divided into 0 G to 4 G and 4 G to 16 G, the first address space is an address space corresponding to 0 G to 4 G, and the second address space is an address space above 4 G. Based on the above, in a process in which a multi-level extended page table is created, multi-level extended page tables respectively corresponding to the first address space and the second address space are created. The first address space is mainly used as a memory address space, and the second address space is used at least as an IO address space. The memory address space is used for describing storage locations of a program and data in a memory, and the IO address space is used for describing an address range of an I/O device of a physical machine. For example, the physical address space is divided into several different address ranges. An address space in which an address range is 0 GB to 4 GB is referred to as the first address space, and an address space in which an address range is above 4 GB is referred to as the second address space. The first address space is referred to as a "basic memory" or a "system memory" and includes a memory used by a host operating system, an application, and a basic hardware drive program. To be specific, the first address space is mainly used as the memory address space. The second address space is referred to as a "large capacity memory" or an "expanded memory". The memory capacity of the second address space is used for a device, such as a high-performance computer, a server, and a workstation, to support a more complex computing task and multitasking processing. For example, the second address space is used at least as the IO address space.

For the first address space, a first mapping relationship between a guest physical address and a host physical address is established at a first page granularity. To be specific, mapping is performed between the guest physical address and the host physical address based on a page size of the first page granularity. A multi-level extended page table corresponding to the first address space is created based on the first mapping relationship. For the IO address space in the second address space, a second mapping relationship between the guest physical address and the host physical address is established at the second page granularity. To be specific, mapping is performed between the guest physical address and the host physical address based on a page size of the second page granularity, and a multi-level extended page table corresponding to the IO address space is created based on the second mapping relationship. The second page granularity is greater than the first page granularity. For example, the first page granularity is 2 M, and the second page granularity is 1 G. Memory mapping is performed at the first page granularity (a small page granularity), so that internal fragments in a memory page are reduced to reduce memory waste and reduce loss of a page table entry in a cache, improving address translation efficiency. Memory mapping is performed at the second page granularity (a large page granularity), so that page table entry data is reduced, a level of an extended page table is reduced, and memory management overhead is reduced, improving performance of a physical computing resource object.

Further, optionally, the second address space is also used as the memory address space. Based on the above, the virtualization layer 30 further establishes, for the memory address space in the second address space, a third mapping relationship between the guest physical address and the host physical address at the third page granularity. To be specific, mapping is performed between the guest physical address and the host physical address based on a page size of the third page granularity, and a multi-level extended page table corresponding to the memory address space is created based on the third mapping relationship. The third page granularity is less than the second page granularity, but a size of the third page granularity is not limited.

In some optional embodiments, the third page granularity is equal to the first page granularity. For example, the first page granularity and the third page granularity are both 2 M. In other words, for a memory address space, address space mapping is performed at a relatively small page granularity, and for an IO address space, the address space mapping is performed at a relatively large page granularity, so that a physical address space is properly used, thereby improving memory management performance.

Further, optionally, in some application scenarios, the memory address space in the second address space includes an APIC page. For the APIC page, a smaller page granularity is used, for example, a fourth page granularity. The third page granularity is greater than the fourth page granularity. For example, the third page granularity is 2 M, and the fourth page granularity is 4 K.

When the memory address space in the second address space includes the APIC page having the fourth page granularity, it means that the APIC page having the fourth page granularity belongs to a physical page having the third page granularity. The physical page having the third page granularity to which the APIC page having the fourth page granularity belongs is referred to as a first physical page for short. Then, the first physical page of the third page granularity to which the APIC page belongs and a target extended page table corresponding to the first physical page are obtained. The target extended page table corresponding to the first physical page is a last-level page table in a multi-level extended page table, and a page table entry in the last-level page table points to an address space of the first physical page. To adapt to the page granularity of the APIC page, the first physical page is divided into a plurality of sub-pages having the fourth page granularity, and a next-level extended page table continues to be extended below the target extended page table. To be specific, the next-level extended page table is added below the target extended page table. The next-level extended page table is used for storing host physical addresses of the plurality of sub-pages obtained through division. For example, a host physical address corresponding to a sub-page is stored in each page table entry of the next-level extended page table, and the host physical address is a head address of the sub-page.

In some embodiments, when the extended page table is created, a manner of a hybrid mapping granularity combining the first page granularity, the second page granularity, the third page granularity, and the fourth page granularity is used, not only a small page granularity is supported, but also a large page granularity is supported, so that requirements for mapping different physical pages are satisfied, improving flexibility of memory mapping.

Further, in the non-root mode provided in the embodiments of the present disclosure, when the extended page table is created, the host physical address space is no longer limited, and it is allowed to create the extended page table for a full physical address space. To be specific, full memory mapping is supported. Therefore, an extended page table is created for a user mode page, and an extended page table created for a kernel mode page is also supported. Memory mapping of the full physical address space is supported to provide a basic framework for various subsequent operations based on memory mapping. For example, when memory swap is performed based on memory mapping, not only swap of the user mode page is supported, but also swap of the kernel mode page is supported. To be specific, full memory swap is supported.

In some embodiments, a specific process in which an extended page table is created is described by using an example in which the first page granularity is 2 M, the second page granularity is 1 G, the third page granularity is 2 M, the fourth page granularity is 4 K, and the multi-level extended page table is implemented as a fourth-level extended page table.

The following provides an example of the four-level extended page table. The four-level extended page table includes a page global directory (PGD), a page upper directory (PUD), a page middle directory (PMD), and a page table entry (PTE). The PGD is a highest-level directory, and the PGD includes a plurality of page global directory entries pgd_t. Each pgd_t maps a host physical address (HPA) with a size of 512 G. The pgd_t points to a next-level page directory (PUD). The PUD includes a plurality of page upper directory entries pud_t, each pud_t maps a host physical address (HPA) with a size of 1 G, and the pud_t points to a next-level page directory (PMD). The PMD includes a plurality of page middle directory entries pmd_t, each pmd_t maps a host physical address (HPA) with a size of 2 M, the pmd_t points to a next-level page directory (PTE), and the PTE includes a plurality of direct page directory entries pte_t. Each pmd_t maps to a host physical address (HPA) with a size of 4 K. Each pte_t points to a corresponding physical page in a host physical address (HPA).
1) For a first address space in which an address range is 0 G to 4 G, a first mapping relationship between a guest physical address and a host physical address is established at a page granularity of 2 M, and a multi-level extended page table corresponding to the first address space is created based on the first mapping relationship.

In step a1, a page table entry pgd_t in a PGD-level extended page table is determined based on an index value of a PGD corresponding to the guest physical address (GPA) in the first address space. The pgd_t points to a PUD-level extended page table.

In step b1, based on a flag bit in the pgd_t, whether the PUD-level extended page table exists is determined, and when the PUD-level extended page table does not exist, a page is applied as the PUD-level extended page table.

In step c1, when the PUD-level extended page table exists, whether the PUD-level extended page table needs to be extended is determined based on a first page granularity (such as 2 M). Because each pud_t maps a host physical address (HPA) having a size of 1 G, and 1 G is greater than the first page granularity (such as 2 M), it is determined that a next-level PMD-level extended page table needs to be extended to prepare for subsequent mapping.

In step d1, a page table entry pud_t in the PUD level extended page table is determined based on an index value of a PUD corresponding to the guest physical address (GPA). The pud_t points to the PMD-level extended page table.

In step e1, based on a flag bit in the pud_t, whether a PMD-level extended page table exists is determined, and when the PMD-level extended page table does not exist, a page is applied as the PMD-level extended page table.

In step f1, based on the first page granularity (such as 2 M), whether the PMD-level extended page table needs to be extended is determined. Because each pmd_t maps to a host physical address (HPA) having a size of 2 M, it is determined that a PTE-level extended page table does not need to be extended.

In step g1, a page table entry pmd_t in the PMD-level extended page table is determined based on an index value of a PMD corresponding to the guest physical address (GPA).

In step h1, the page table entry pmd_t in the PMD-level extended page table is directly created when a mapped page granularity is 2 M. The pmd_t points to a physical page of a host physical address (HPA), and a size of the physical page is 2 M. Therefore, the page table entry pmd_t of the PMD-level extended page table needs to be obtained through a combination. The pmd_t includes a physical page frame number (PFN) corresponding to a corresponding HPA, the page table entry is set to be accessible, and a large page flag bit is set to 1. For example, the large page is a physical page having a size of 2 M or 1 G, and a physical page having a size of 4 K does not belong to the large page.

In step i1, the page table entry pmd_t of the PMD-level extended page table obtained through a combination is filled into a PMD-level extended page table, to complete mapping with the first page granularity (such as 2 M) once, and a mapping completion progress and a next guest physical address that needs to be mapped are recorded, until mapping with the first page granularity is created for the first address space.

In step j1, whether the mapping with the first page granularity (such as 2 M) is completed, when the mapping with the first page granularity is not completed, step b is performed, and otherwise, the process ends.

2) For an input/output (IO) address space in a second address space, a second mapping relationship between a guest physical address and a host physical address is established at a second page granularity, and a multi-level extended page table corresponding to the IO address space is created based on the second mapping relationship. To be specific, a multi-level extended page table with a second page granularity (such as a 1-G granularity) is created for the IO address space (such as a memory address space above 4 G) in the second address space based on an address space (that is, a physical memory space and a physical IO space) of a host operating system recorded in an IO memory resource (that is, iomem_resource). A process in which the multi-level extended page table is created is similar to the foregoing implementation in which the multi-level extended page table is created at the first page granularity, except that: to create the multi-level extended page table with the second page granularity (such as a 1-G granularity), pud_t needs to be created in a PUD-level extended page table. The pud_t points to a physical page of a host physical address (HPA), and a size of the physical page is 1 G.

3) For a memory address space in the second address space, a third mapping relationship between a guest physical address and a host physical address is established at a third page granularity (such as 2 M), and a multi-level extended page table corresponding to the memory address space is created based on the third mapping relationship, where the third page granularity is less than the second page granularity. For a process in which a multi-level extended page table is created, reference is made to the foregoing implementation in which the multi-level extended page table is created based on the first page granularity. Details are not described herein again.

4) When a memory address space includes an APIC page having a fourth page granularity, a first physical page having a third page granularity to which the APIC page belongs and a target extended page table corresponding to the first physical page are obtained; and the first physical page is divided into a plurality of sub-pages having a fourth page granularity, a next-level extended page table is added below the target extended page table, and the next-level extended page table is used for storing host physical addresses of the plurality of sub-pages obtained through division.

5) A special APIC page is applied, and a physical address of the APIC page is a guest physical address.

6) Mapping between a host physical address of an APIC and the fourth page granularity (such as a 4-K granularity) of this special APIC page is created. A default host physical address (APIC_DEFAULT_PHYS_BASE) of the APIC is (0xfee00000), and the default host physical address corresponds to the memory address space in the second memory space. In this process, division of a created page having a third page granularity (such as a 2-M granularity) is involved, and a mapping process includes the following steps.

In step a2, steps a1 to e1 in step 1) are sequentially performed, and based on a fourth page granularity (such as 4 K), whether a PMD-level extended page table needs to be extended is determined. Because each pmd_t maps a host physical address (HPA) having a size of 2 M, and 2 M is not equal to 4 K, it is determined that a PTE-level extended page table needs to be extended.

In step b2, a page table entry pte_t in the PTE-level extended page table is determined based on an index value of a PTE corresponding to the guest physical address (GPA). Through a combination, content of the pte_t is obtained, including a physical page frame number corresponding to an HPA, and the page table entry pte_t is set to be accessible. In this case, the large page flag bit is not set to 1.

In step c2, the page table entry content of the PTE-level extended page table that is obtained through a combination is filled into a corresponding pte_t to complete this mapping.

In step S2, an information bearing object required for mode switching is created.

In some embodiments, to perform mode switching for a host operating system, on one hand, a physical descriptor structure is created for each physical computing resource object 101, as shown in step S21 in FIG. 2c. In some subsequent descriptions, the physical descriptor structure is referred to as a pcpu for short, and the physical descriptor structure is used for saving context information of each physical computing resource object running in a root mode during mode switching. The context information of the each physical computing resource object in the root mode includes, but is not limited to, values of various registers used by the each physical computing resource object, state information of the each physical computing resource object, state information of a host, related configuration information, and the like. The related configuration information includes, but is not limited to, a frequency of a high voltage (HV) timer, and the like.

In some embodiments, an implementation of the physical descriptor structure is not limited, and each implementation structure that saves the context information of the physical computing resource object running in the root mode is applicable to the embodiments of the present disclosure. In some optional embodiments, the physical descriptor structure includes, but is not limited to, the following parts or fields: a first register structure (regs), a field carrying state information of a physical computing resource object, a field carrying state information of a host, and a field carrying configuration information. The first register structure includes, but is not limited to, a general purpose register field, a debug register field, a stack-related register field, a floating point unit (fpu) register field, a model specific register (MSR) field, or the like.

To perform mode switching for the host operating system, on the other hand, a virtualization descriptor structure is created for the each physical computing resource object, as shown in step S22 in FIG. 2c. In some subsequent descriptions, the virtualization descriptor structure is referred to as a vcpu for short, and the virtualization descriptor structure is used for synchronizing context information in a physical descriptor structure during mode switching. The virtualization descriptor structure represents a virtual computing resource object obtained by virtualizing a physical computing resource object.

An implementation of the virtualization descriptor structure is not limited, and each implementation structure that synchronizes context information in a physical computing resource object is applicable to the embodiments of the present disclosure. In some optional embodiments, the vcpu includes, but is not limited to, the following field: a second register structure (regs) corresponding to the first register structure. In addition, the vcpu further includes a field carrying a virtual computing resource object identification instruction (such as cpu_id), a field carrying an interrupt vector number (such as apic_id), a field carrying a running state of the vcpu, a field carrying a switching flag of a state change in a vcpu switching process, a field carrying related configuration information of an APIC register, a field carrying configuration information of a model specific register (such as an MSR register), a field carrying configuration information of processor operation code (such as CPUID), a field carrying a descriptor of a program interruption (PI), a field carrying configuration information related to an exit event, and the like.

Further, to perform mode switching for a host operating system, a virtualization control structure is created for the each physical computing resource object, as shown in step S23 in FIG. 2c. For example, the virtualization control structure is implemented as a Virtual Machine Control System (VMCS), and the virtualization control structure is used for saving running state information and running control information of the each physical computing resource object in a non-root mode. For example, running state information of a physical computing resource object in a non-root mode is values of some registers, and a state of the physical computing resource object, for example, an active state, a halt (HLT) state, or a shutdown state. The running control information mainly refers to control information for a host operating system in a non-root mode. For example, the running control information saved in the virtualization control structure includes, but is not limited to, the following fields: a field carrying an exit event in a non-root mode, a field carrying a processor model specific register bitmap (msr_bitmap), a field carrying APIC virtualization, a field carrying interrupt virtualization, a field carrying a preemption timer, a field carrying clock configuration, a field carrying IO control information, or the like. Information in a corresponding field is configured as required according to an actual situation when a virtualization control structure is initialized.

In some optional embodiments, the virtualization layer 30 further creates an IO bitmap (io_bitmap), as shown in step S24 in FIG. 2c. The IO bitmap is used for recording an access permission of the each physical computing resource object to each IO port in a non-root mode, and the access permission is associated with IO control information in running control information. The access permission is 0 by default. To be specific, accesses to all IO ports are allowed. Subsequently, when some IO ports needs to be intercepted, io_bitmap is configured as required.

Further, the virtualization layer 30 further creates a new stack. For ease of description and distinction, the new stack is referred to as a first stack, as shown in step S25 in FIG. 2c. The new stack (that is, the first stack) is relative to an old stack. For ease of description and distinction, the old stack is referred to as a second stack. The old stack (that is, the second stack) is a stack currently used by the each physical computing resource object. After switching from a root mode to a non-root mode, the each physical computing resource object continues to run in the non-root mode by using the old stack. It is described herein that after switching from a root mode to a non-root mode, a physical computing resource object is implemented as a virtual physical computing resource object. For example, a physical cpu is implemented as a virtual cpu. The first stack is a stack prepared for the virtualization layer 30, and is used by the virtualization layer 30 for performing memory access based on the new stack (that is, the first stack) in the root mode.

In some optional embodiments, the virtualization layer 30 further separately initializes a virtualization descriptor structure and a virtualization control structure, as shown in step S26 in FIG. 2c. An initialization process is a process in which a required function is enabled, a memory page is applied for the required function, and an initial value is configured. A process in which the virtualization descriptor structure is initialized is adding initialization information corresponding to a function that needs to be enabled to a corresponding field of the virtualization descriptor structure. A process in which the virtualization control structure is initialized is adding initialization information corresponding to a function that needs to be enabled to a corresponding field of the virtualization control structure.

Optionally, the virtualization layer 30 configures, in the virtualization control structure, running control information when a physical computing resource object runs in a non-root mode. For example, the running control information includes, but is not limited to, at least one of MSR control information, PI control information, APIC control information, hardware register operation instruction information, an entry address of an extended page table, and related configuration information for exiting a non-root mode.

Further, optionally, when configuring the running control information, the virtualization layer 30 is specifically configured to perform at least one of the following configuration operations.

In step a3, a model specific register bitmap (such as msr_bitmap) is created, and a second physical page saving the bitmap is allocated.

In step b3, a PI interrupt function is set, and a PI notification vector is set.

In step c3, an APIC interrupt control function is set, a third physical page saving an APIC table is allocated from a physical address space, and a base address of a page where the APIC table is located is saved in an APIC field; in addition, APIC_ID also needs to be set as apic_id of a current physical computing resource object (such as a CPU), and an APIC local vector register (APIC_LVR) inherits a setting of the current physical computing resource object (such as the CPU); and when an apic timer is intercepted, a configuration and a processing function for a timer are further configured.

In step d3, processor operation code (such as a CPUID) is set, and a cache of a virtual computing resource object is created.

In step e3, pause-loop exiting (PLE) is set, where the PLE is configured for reducing waste of a virtual computing resource caused by circular waiting.

In step f3, an entry address of the multi-level extended memory page generated in step S1 is saved in a virtualization control structure, and a location of an RIP instruction executed after a non-root mode is exited needs to be set.

In step g3, configuration of a general purpose register in a default root mode and a default non-root mode is set.

A process in which each virtualization descriptor structure and each virtualization control structure are initialized includes the following steps.
1) Each virtualization descriptor structure (vcpu) is sequentially loaded, and an initialization settings operation is performed on each vcpu structure.
2) A virtualization control structure (vmcs) structure corresponding to the vcpu is loaded as a current vmcs.
3) Running control information for the current vmcs is configured, that is, step a3 to step g3 are performed.
4) A current vmcs structure is cleared.
5) Whether a vcpu that needs to be initialized is initialized is determined, where when the vcpu is not initialized, step 1) to step 4) are performed repeatedly, and when the vcpu is initialized, initialization is ended.

Based on the above, mode switching for a host operating system relates to switching from a physical computing resource object to a virtual computing resource object, and further relates to synchronization of context information, access control of an IO operation, and switching of memory access. Therefore, a physical descriptor structure corresponding to the physical computing resource object and a virtualization descriptor structure corresponding to the virtual computing resource object are created, to facilitate being responsible for the synchronization of the context information in a mode switching process; an IO bitmap is created, to facilitate performing access control of the IO operation in the mode switching process; and a first stack is created, to facilitate switching of memory access by the virtualization layer 30 in the mode switching process.

After the extended page table is created and the various information bearing object are created, it means that a mode switching basis is made. On this basis, the host operating system is switched from a root mode to a non-root mode based on the information bearing object and the extended page table.

In step S3, the host operating system is switched from the root mode to the non-root mode based on the information bearing object and the extended page table.

In some embodiments, mode switching is performed for each physical computing resource object, and processes in which mode switching is performed for physical computing resource objects are the same. For ease of description and distinction, an example in which mode switching is performed for a target physical computing resource object is used below for description. The target physical computing resource object is any physical computing resource object.

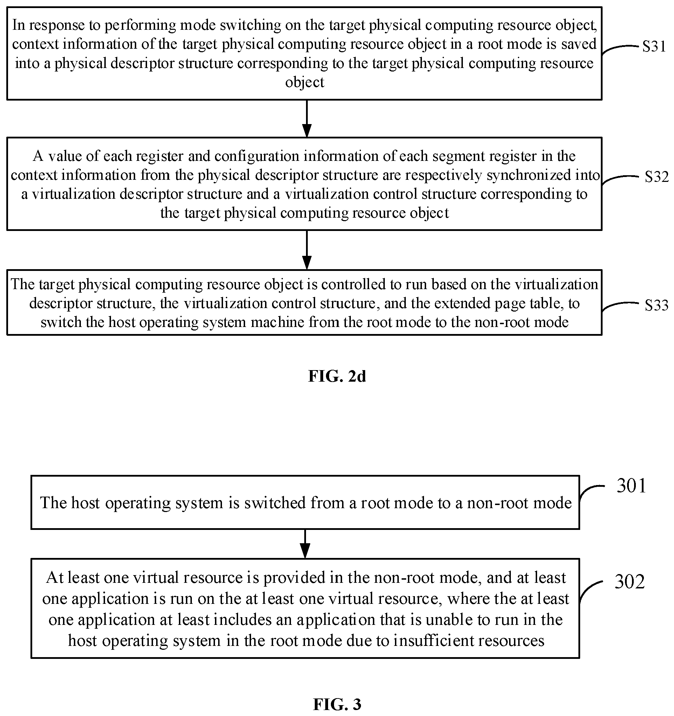

As shown in FIG. 2d, a process in which mode switching is performed on the target physical computing resource object includes the following steps. In step S31, in response to performing mode switching on the target physical computing resource object, context information of the target physical computing resource object in a root mode is saved into a physical descriptor structure corresponding to the target physical computing resource object. In step S32, a value of each register and configuration information of each segment register in the context information from the physical descriptor structure are respectively synchronized into a virtualization descriptor structure and a virtualization control structure corresponding to the target physical computing resource object. In step S33, the target physical computing resource object is controlled to run based on the virtualization descriptor structure, the virtualization control structure, and the extended page table, to switch the host operating system machine from the root mode to the non-root mode.

For example, the value of each register in the context information from the physical descriptor structure is synchronized into the virtualization descriptor structure corresponding to the target physical computing resource object, and configuration information of each segment register in the context information from the physical descriptor structure is synchronized into the virtualization control structure corresponding to the target physical computing resource object. The configuration information of each segment register includes, but is not limited to, a size of a segment, a start address of the segment, and a management attribute of the segment. For example, the management attribute of the segment includes: write inhibit, execution inhibit, system exclusive, or the like.

In some embodiments, step S1 and step S2 are performed when the virtualization layer 30 is started or initialized, and step S3 is performed as required based on a dynamic demand (an external instruction). Whether mode switching is performed on the target physical computing resource object is determined through the external instruction.

In some optional embodiments, the host operating system 20 in some embodiments provides, to an external part, a symmetrical multi-processing (SMP) call interface, allowing an SMP calling request to be externally sent for a physical computing resource object on a physical machine. The SMP calling request is used for indicating that mode switching needs to be performed for a physical computing resource object. For ease of distinguishing and describing, an example in which the SMP calling request is externally sent for the target physical computing resource object is used for description. For example, an upper layer application running on the host operating system 20 initiates the SMP calling request to the target physical computing resource object, or a developer initiates the SMP calling request to the target physical computing resource object through the host operating system 20.

When receiving the SMP calling request, the target physical computing resource object initiates a calling request for a switching function, to trigger mode switching. Correspondingly, the virtualization layer 30 provides the switching function (such as a switch_vcpu function) for the host operating system to perform mode switching, so that the target physical computing resource object runs the switching function to switch the host operating system from a root mode to a non-root mode. Specifically, this refers to performing an operation of saving context information of the target physical computing resource object in the root mode into a physical descriptor structure corresponding to the target physical computing resource object and a subsequent operation (such as step S32 and step S33), to perform the mode switching on the physical computing resource object. After the non-root mode is entered, the virtualization layer 30 further controls the target physical computing resource object to exit from the non-root mode to the root mode when an exit event configured in the virtualization control structure occurs.

In some optional embodiments, in a mode switching process, before the context information is saved, whether a switching flag corresponding to the target physical computing resource object is in a pending switch state is determined. When the switch flag is in the pending switch state, the switching flag is updated to a switching-in-progress state. For example, the target physical computing resource object obtains the state of the switching flag. When the switch flag is in the pending switch state (such as VMX_OFF), the switching flag is updated to the switching-in-progress state (such as VMX_SWITCH).When the switch flag is in the switching completion state (such as VMX_ON), SMP calling is directly returned, and mode switching is not performed. Optionally, in a case that the SMP calling is returned, some other finishing touches are performed. The virtualization layer 30 further configures a first instruction after a first entry into the non-root mode for the first time, and the first instruction is an entry address of the switching function.

The switching function is divided into a top half and a bottom half. For example, the switching function is performed through a function entry, such as switch_vcpu. As the host operating system switches between different modes, code paths after the switching function is performed for different times are different. When switching from a root mode to a non-root mode for the first time, SMP calling is initiated to the target physical computing resource object. The SMP calling is used for triggering mode switching. First, a state of a switching flag is detected. When it is determined that the switching flag is in a pending switch state, the mode switching is triggered, and a top half of a switching function is performed. In the top half, the switching flag is first set to a switching-in-progress state (such as VMX_SWITCH), and a first instruction, that is, an entry address of the switching function, executed after a non-root mode is entered, is set. Then, in the top half of the switching function, an operation of switching a host operating system from a root mode to a non-root mode is performed. After the target physical computing resource object enters the non-root mode, the first instruction is executed. The first instruction is to execute the switching function. In this case, the switching flag is already in the switching-in-progress state, the bottom half of the switching function is performed, switching is completed in the bottom half of the switching function, and the SMP calling is returned.

Optionally, for ease of distinguishing and describing, a stack that is currently used (that is, before switching to a non-root mode) by a target physical computing resource object is referred to as a second stack. When saving the context information of the target physical computing resource object into the root mode to the physical descriptor structure corresponding to the target physical computing resource object, the virtualization layer 30 is specifically configured to save a value of each register in the context information and a stack top address and a stack bottom address of the second stack into the physical descriptor structure. For example, the value of each register in the context information is saved into the physical descriptor structure. Specifically, the control register, the segment register, and the general purpose register are saved in a register structure in the physical descriptor structure, and the stack top address and the stack bottom address of the second stack are saved in corresponding stack fields of a host register in the physical descriptor structure (pcpu) and used during subsequent mode switching.

The virtualization layer 30 further switches the second stack currently used by the target physical computing resource object to a newly created first stack, so that the virtualization layer 30 continues to run in the root mode based on the first stack.

Further, optionally, when controlling, based on a virtualization descriptor structure, a virtualization control structure, and an extended page table, the target physical computing resource object to run, the virtualization layer 30 is specifically configured to load values of special-purpose registers in the virtualization control structure and the virtualization descriptor structure. The special-purpose registers are a set of registers having a specific function, and the special-purpose registers are for special use and are accessed and used by specific instructions or a hardware module, for example, a PI register, a debug register (DR) register, an MSR register, or a segment register. Further, a segment register of a pcpu is also saved, and a value of the segment register in the vcpu is loaded. Running control information in the virtualization control structure is injected into the target physical computing resource object, and values of general purpose registers in the virtualization descriptor structure are loaded. The general purpose registers are a set of registers that are used by a developer and are configured to store general information, such as data and an address. The general purpose registers are accessed and used by any instructions in a program, for example, a pointer register or an index register. Loading a value of a corresponding register indicates loading a value of a register stored in a vcpu to a specific hardware register, so that a target physical computing resource object runs in a non-root mode. A mode switching instruction is executed to control the target physical computing resource object to enter the non-root mode and run starting from a first instruction. Memory management and access are performed based on an extended page table during running.

Further, optionally, after the host operating system is switched from a root mode to a non-root mode, the virtualization layer 30 further restores the second stack to a stack top address and a stack bottom address that are saved in the physical descriptor structure and update a switching flag to a switching completion state (such as VMX_ON). After switching from the root mode to the non-root mode, the second stack (that is, the old stack) is restored to the stack top address and the stack bottom address that are saved in the physical descriptor structure, facilitating the target physical computing resource object to continue to run in the non-root mode based on the second stack.

The following describes a process in which the host operating system switches from the root mode to the non-root mode through a target physical computing resource object in a running state.
1) An SMP calling request is externally sent to a target physical computing resource object needing switching, and the SMP calling is to trigger execution of cpu mode switching. The cpu mode switching here is switching from a root mode to a non-root mode.
2) The virtualization layer 30 receives the SMP calling request and determines a switching flag corresponding to the target physical computing resource object. When the switching flag is in a switching completion state (such as VMX_ON), SMP calling is directly returned. When the switching flag is in a pending switch state (such as VMX_OFF), mode switching is triggered, and step 3 is performed.
3) The virtualization layer 30 performs a switching function through a function entry, for example, switch_vcpu, and the switching function is divided into a top half and a bottom half. Different code paths for the switching function are performed based on whether mode switching is performed for the first time. The top half is performed when the mode switching is performed for the first time, and the bottom half is performed when the mode switching is not performed for the first time.
4) When the switching function is performed for the first time, a target physical computing resource object is in a root mode that is not switched, the top half of the switching function is performed, and a switching flag is first set to a switching-in-progress state (such as VMX_SWITCH) in the top half.
5) A first instruction executed after the non-root mode is entered is set. The first instruction, similar to the first instruction in the above, is still the entry address of the switching function. However, in this case, the switching flag is in the switching-in-progress state, and the bottom half of the switching function is performed.
6) An operation of saving a value of a register regs of the target physical computing resource object includes: saving registers such as KERNEL_GDTR_BASE, SYSENTER_ESP, SREG_TR_BASE, SREG_GDTR_BASE, SREG_LDTR_SEL, and REGS_CR4 on a host, saving an entry address of an extended page table to an REGS_CR3 register, saving segment registers such as a data segment (DS) register, an extra segment (ES) register, an extra segment (FS) register, and an extra segment (GS) register, and saving an FPU register. Then, the virtualization layer 30 directly reads a value of a general purpose register by using a segment of assembly. For example, general purpose registers include, but are not limited to: rax (an accumulator), rbx (a base register), rdx (a data register), rsi (a register used as a source operand), rdi (a register used as a destination operand), rbp (a register storing a stack bottom pointer), r8-r9 (registers storing a function parameter), and r9-r15 (registers saved by a caller).
   The KERNEL_GDTR_BASE is used for describing a macro of a base address of a global descriptor table register (GDTR) in an operating system kernel. The SYSENTER_ESP is used for saving a base address in a kernel that is used for obtaining a local task state segment (TSS) descriptor. The SREG_TR_BASE is used for obtaining a descriptor of a currently performed task, the descriptor is used for obtaining memory addresses of code and data of the current task, and state information of the task. The SREG_GDTR_BASE is used for obtaining a base address of a global descriptor table register, the base address is used for obtaining an address of a descriptor table, thereby accessing and controlling an attribute of each segment in a system. The SREG_LDTR_SEL is used for obtaining a selector of a local descriptor table register, the selector is used for selecting a specific descriptor, thereby accessing and controlling an attribute of each segment in a current task. The REGS_CR4 is used for obtaining a value of a CR4 (Control Register) register, the value is used for querying or modifying some characteristics and behaviors of a processor.
7) A stack top address and a stack bottom address of a second stack currently run by a target physical computing resource object are saved into corresponding stack fields of a host register of a pcpu and are used during subsequent mode switching.
8) An operation of switching to a new stack (that is, the first stack) created by a virtual descriptor structure (vcpu) is performed, facilitating the virtualization layer 30 to run based on the new stack in the root mode.
9) A register required for executing vcpu switching is prepared, including the following operations.

In step a4, a virtualization control structure (vmcs) corresponding to the vcpu is first loaded.

In step b4, an operation of associating the virtual descriptor structure (vcpu) with a current physical descriptor structure (pcpu) is performed.

In step c4, an operation of converting a value of a regs in the pcpu saved previously into a regs in the vcpu, and loading configuration of various segment registers into the vmcs is performed, so as to run continually using previous instructions after a non-root mode is entered.

In step d4, preparation of the register of the vcpu is completed, and a selected vmcs is cleared.

10) Switching of the vcpu starts to be performed to enter the non-root mode. Herein, the switching of the vcpu is performed by the virtualization layer 30, and when a first entry into the non-root mode for the first time, the virtualization layer 30 continues to execute logic that runs in an infinite loop, for example: while (1) {vcpu_run(vcpu);}, indicating a loop in which vcpu running is executed, to complete a switching function. Then, when the non-root mode is entered, normal running logic for the vcpu is directly executed. The switching process specifically includes the following steps.

In step a5, an operation of officially preparing to enter a non-root mode, and loading a corresponding vmcs is performed.

In step b5, a PI register, a DR register, or an MSR register of the vcpu is loaded, a GS register of a current pcpu is saved, and simultaneously a GS register of the vcpu is loaded.

In step c5, an operation of entering loop running in the non-root mode includes the following operations.

In step i, for the entry, an interrupt that needs to be injected and an interrupt for synchronizing PI are set, and a preemption timer is set.

In step ii, a control field (in_guest=1) of a vcpu is set.

In step iii, a previously saved general purpose register is loaded.

In step iv, an operation of running in the non-root mode by enabling a (VMLAUNCH) instruction is performed. It is described here that during actual first mode switching, step 11) is directly performed from this operation.

11) At this time, the target physical computing resource object already runs in the non-root mode and executes a first instruction in the non-root mode that is set to execute the switching function (switch_vcpu) in step 5). In this case, a switching flag is in a switching-in-progress state, and the bottom half of the switching function is performed, aiming to complete an SMP calling process for initiating the switching of the vcpu, and preventing another physical computing resource object transmitting SMP calling from keeping waiting for switching completion.

The following operations are performed in the bottom half of the switching function.

In step i, an operation of restoring the second stack (that is, an old stack) to a stack value previously saved in a host register of a pcpu is performed, which is mainly intended to enable the target physical computing resource object to continually run in a non-root mode based on a restored old stack.

In step ii, a switching flag is set to a switching completion state (VMX_ON).

In step iii, switching is completed and SMP calling is returned.

12) After the SMP calling is returned, the target physical computing resource object always runs in the non-root mode. When an exit event is triggered, an exit operation is performed. The exit operation is a relatively independent operation and is performed when it is triggered, and the exit operation specifically includes the following operations.

In step i, during exiting, a general purpose register is saved into a corresponding field of a vcpu.

In step ii, an exit execution flag (such as vmx_retum) is set, which is used for restoring a performed operation after exiting to a root mode.

In step iii, a control field is reset (such as in_guest=0) and a start field is set (such as launched=1) after exiting from the non-root mode.

In step iv, an exit event is processed, where when it is processed, a preset processing function is directly called; and otherwise, processing outside a loop is performed.

In step v, when exiting from the loop, the GS register of the vcpu is saved, then a GS register of the pcpu is restored, and a PI register, a DR register, an MSR register, and the like of a current vcpu are simultaneously saved.

In step vi, a selected vmcs is cleared, and a start field is set (such as launched=0).

It is described herein that an operation before a non-root mode is entered is run and completed by a virtualization layer 30 in a root mode. After the non-root mode is entered, running logic for a normal vcpu is executed. Logic for complete mode switching includes a process in which a non-root mode is entered, a vcpu runs, and the vcpu returns to a root mode through exiting. The operations of entering the non-root mode and returning to the root mode through exiting are also completed in the root mode.

According to the embodiments of the present disclosure, it is considered that a lightweight virtualization layer is inserted between a host operating system and hardware resources through a hardware virtualization function, implementing a virtual resource providing function in the virtualization layer. Through the virtualization layer, the host operating system is switched from the root mode to the non-root mode. Thus, in the non-root mode, at least one virtual resource is provided, and at least one application runs on the at least one virtual resource. The at least one application at least includes an application that is unable to run in the host operating system in the root mode due to insufficient resources. Without the need to reinstall the host operating system, the virtual resource providing function is flexibly implemented for the host operating system in the running state, to resolve a problem of a host operating system that an application cannot be run due to insufficient resources because a related system function is not enabled or missing in a root mode, so that the host operating system supports running of more applications, helping extend a capability of the host operating system. After the host operating system switches from the root mode to the non-root mode, at least one application that runs on the virtual resources provided in the non-root mode includes, but is not limited to, establishing a target function in the non-root mode, such as memory management, file management, a virtualization function, and scheduling optimization.

In the following embodiments, memory page fault management in memory management is used as an example to describe a memory page fault management process in a non-root mode in detail. It is described herein that an application scenario of the memory page fault is memory swap. To be specific, a memory page fault situation occurs in a memory swap process, but the memory page fault is not only used in the memory swap process. To conveniently embody advantages of memory page fault management implemented in a non-root mode in the embodiments of the present disclosure, an example in which the memory page fault is used for the memory swap is used for description, and a related description of the memory swap is made first.

A memory swap function in a host operating system (such as a Linux system) is a mechanism in which an idle hard disk space is used for memory expansion. When a memory page in a main memory (such as a RAM) is insufficient, the swap function moves some memory pages that are not commonly used to a hard disk, to make space for other pages to use. This process is referred to as page swap out. When a process uses this swapped-out part again, page swap in is triggered.

The swap function of the host operating system (such as the Linux system) includes two aspects: a swap partition and a swap file. The swap partition is used to swap a hard disk space and is also referred to as a swap space. The swap partition is allocated during installation of the host operating system, or is manually created through a command such as a fdisk command or a mkswap command. After an idle disk space is divided into the swap partition, the idle disk space is mounted as the swap partition through a swapon command. Advantages of the swap partition are a fast speed and high stability. However, a size of a partition needs to be planned, and cannot be dynamically adjusted. The fdisk command is used for creating, deleting, modifying, and displaying a magnetic disk partition. The mkswap command is used for creating the swap partition. The swapon command is used for enabling the swap partition on a physical machine.

The swap file is a file created in an ordinary file system and is used as the swap space. The swap file is created through a command such as dd or fallocate, then is formatted into a swap file system through a mkswap command, and finally is mounted as the swap space through a swapon command. The dd command and the fallocate command are both used for creating a file. The swap file has an advantage of high flexibility and a size that is dynamically adjusted to facilitate management. However, performance of the swap file is slightly lower than that of the swap partition.

In the host operating system (such as the Linux system), the size of the swap space is set to twice or three times the size of a physical memory. When the physical memory is sufficient, a usage rate of the swap space is very low, with no significant influence on performance of a physical machine. When the physical memory is insufficient, the usage rate of the swap space is very high, seriously affecting the performance of the physical machine. Therefore, performance of the swap space is also crucial to stability of the performance of the physical machine.

In addition, a swap function of a kernel of the host operating system (such as the Linux) is specific to a user process and does not directly affect swapping in or swapping out a kernel page. When a memory is insufficient, the kernel attempts to recover some unnecessary pages and swap the pages to a magnetic disk through the swap function, to release a memory space. These unnecessary pages include a user process page, a cache page, an anonymous memory page, and the like, but do not include a kernel page, because the kernel page cannot be swapped. Kernel code and data are locked in a memory and not swapped to the magnetic disk, and therefore are not affected by the swap function. Moreover, the swap function currently supports a small page having a size of 4 K and still does not support a swap function under a large page. However, currently, the large page (such as 2 M or 1 G) is more frequently used in cloud computing. When a running operating system is not configured with the swap function, it is enabled online through a file. Performance is very low, and stability of a system is seriously affected.

Some system functions missing from the host operating system are implemented by loading a function module, which, however, is disruptive and constrained by various existing structures, functions, and the like in an operating system, and not necessarily resolves all problems, such as the swap of the kernel mode page mentioned above. In the embodiments of the present disclosure, an operation of switching from a root mode to a non-root mode is performed based on a virtualization layer, and a virtual memory resource is provided in the non-root mode, so that a memory swap function is implemented. Whether a host operating system enables the memory swap function is no longer a limitation. In addition, the solution provided in the embodiments of the present disclosure is more transparent and unperceptible to upper layer applications, and implements a more comprehensive function.

Further, in the embodiments of the present disclosure, when the extended page table is created, a manner of a hybrid mapping granularity combining the first page granularity, the second page granularity, the third page granularity, and the fourth page granularity is used, not only a small page granularity is supported, but also a large page granularity is supported, so that requirements of mapping for different physical pages are satisfied, improving flexibility of memory mapping. Memory mapping is performed at the small page granularity, so that internal fragments in a memory page are reduced to reduce memory waste. Memory mapping is performed at the large page granularity, so that page table entry data is reduced, a level of an extended page table is reduced, and memory management overhead is reduced, improving performance of a physical computing resource object.

Further, in the embodiments of the present disclosure, when the extended page table is created, the host physical address space is no longer limited, and it is allowed to create the extended page table for a full physical address space. To be specific, full memory mapping is supported. Therefore, an extended page table is created for a user mode page, and it is also supported that an extended page table is created for a kernel mode page. Memory mapping of the full physical address space is supported, to provide a basic framework for various subsequent operations based on memory mapping. For example, when memory swap is performed based on memory mapping, not only swap of the user mode page is supported, but also swap of the kernel mode page is supported. To be specific, full memory swap is supported. The following briefly describes a process in which memory page fault management is implemented after switching to the non-root mode.
1) The foregoing extended page table (such as an ept page table) prepared for mode switching for the host operating system has a guest physical address (GPA) and a host physical address (HPA) that are in one-to-one correspondence. A normal operation does not trigger a page default exception in a non-root mode. To extend a memory management function of a host operating system, some memory pages (a page granularity is 4 K or 2 M) are recovered through methods, such as, recovering an idle page, or compressing a used page, or swapping a memory page to a magnetic disk, or extending a new virtual memory space, and a page table entry of a corresponding extended page table is cleared. In this way, subsequent accesses in a non-root mode trigger the page fault exception. Currently, extended page tables of a batch of idle pages are directly cleared to trigger the page fault exception.
2) Because the batch of memory pages has been cleared and recovered in step 1), memory management is performed through a simple memory management system, such as a state bit, to facilitate subsequent use for the page fault exception.
3) Before the page fault exception is processed, a processing function is set in an exit event in a non-root mode. For example, a page fault processing function (such as ept_handler) for exit reason EPT page fault association (EXIT_REASON_EPT_VIOLATION) is set.
4) In the page fault function (such as ept_handler), an unused host physical page is selected from a bottom-layer memory management system and is marked as being used.
5) A mapping relationship is established between the unused host physical address (HPA) of the physical page and a guest physical address (GPA) subjected to a page fault, and a corresponding page table entry is created in a corresponding extended page table (such as an ept page table), so that the host operating system implements memory management in the non-root mode. The memory management here includes, but is not limited to, memory swap.

In addition to the system embodiments, the embodiments of the present disclosure further provide a virtualization processing method. The following describes a process of the virtualization processing method provided in the embodiments of the present disclosure.

FIG. 3 is a schematic flowchart of a virtualization processing method according to some exemplary embodiments of the present disclosure. The virtualization processing method is applied to a virtualization layer in a physical machine, and the virtualization layer is located between hardware resources of the physical machine and a host operating system. As shown in FIG. 3, the virtualization processing method includes the following steps.

In step 301, the host operating system is switched from a root mode to a non-root mode.

In step 302, at least one virtual resource is provided in the non-root mode, and at least one application is run on the at least one virtual resource, where the at least one application at least includes an application that is unable to run in the host operating system in the root mode due to insufficient resources.

In some optional embodiments, the hardware resources include at least one physical computing resource object and a physical address space, the physical address space has a host physical address, and the host operating system runs on the at least one physical computing resource object. An operation of switching the host operating system from the root mode to the non-root mode includes the following steps. An extended page table is created to store a mapping relationship between the guest physical address in the non-root mode and the host physical address in the root mode. An information bearing object required for mode switching is created, where the information bearing object is used for synchronizing context information between the root mode and the non-root mode. And the host operating system is switched from the root mode to the non-root mode based on the information bearing object and the extended page table.

Optionally, an operation of creating the extended page table includes the following steps. A page table structure corresponding to the extended page table is created, and a root page of the extended page table is applied for from a physical address space. An entry address of the extended page table is generated based on the host physical address of the root page, and the entry address is added to the page table structure. And a multi-level extended page table is created based on an address range of the physical address space and a page granularity used for mapping the guest physical address to the host physical address.

Further, optionally, an operation of creating the multi-level extended page table based on the address range of the physical address space and the page granularity used for mapping the guest physical address to the host physical address includes the following steps. For a first address space, a first mapping relationship between the guest physical address and the host physical address is established at a first page granularity, and a multi-level extended page table corresponding to the first address space is created based on the first mapping relationship. For an input/output (IO) address space in a second address space, a second mapping relationship between the guest physical address and the host physical address is established at a second page granularity, and a multi-level extended page table corresponding to the IO address space is created based on the second mapping relationship, where the second address space is greater than the first address space, and the second page granularity is greater than the first page granularity.

Further, optionally, the virtualization processing method provided in embodiments of the present disclosure further includes the following steps. For a memory address space in the second address space, a third mapping relationship between a guest physical address and a host physical address is established at a third page granularity, and a multi-level extended page table corresponding to the memory address space is created according to the third mapping relationship, where the third page granularity is less than the second page granularity.

Further, optionally, the virtualization processing method provided in the embodiments of the present disclosure further includes the following steps. When a memory address space includes an advanced programmable interrupt controller APIC page having a fourth page granularity, a first physical page having a third page granularity to which the APIC page belongs and a target extended page table corresponding to the first physical page are obtained, where the third page granularity is greater than the fourth page granularity. And the first physical page is divided into a plurality of sub-pages having the fourth page granularity, and a next-level extended page table is added below a target extended page table, where the next-level extended page table is used for storing host physical addresses of the plurality of sub-pages obtained through division.

In some optional embodiments, an operation of creating the information bearing object required for the mode switching includes the following steps. A physical descriptor structure is created for each physical computing resource object, where the physical descriptor structure is used for saving context information of this physical computing resource in the root mode during the mode switching. A virtualization descriptor structure is created and initialized for each physical computing resource object, where the virtualization descriptor structure is used for synchronizing the context information in the physical descriptor structure during the mode switching. And a virtualization control structure is created and initialized for each physical computing resource object, to save running state information and running control information of this physical computing resource object in the non-root mode.

Optionally, the virtualization processing method provided in the embodiments of the present disclosure further includes the following steps. A first stack and an IO bitmap are created, where the first stack is used for enabling the virtualization layer to perform memory access in the root mode, the IO bitmap is used for recording an access permission of each physical computing resource object for each IO port in the non-root mode, and the access permission is associated with IO control information in the running control information.

Further, optionally, an operation of switching the host operating system from the root mode to the non-root mode based on the information bearing object and the extended page table includes the following steps. In response to performing mode switching on a target physical computing resource object, context information of the target physical computing resource object in the root mode is saved into a physical descriptor structure corresponding to the target physical computing resource object. A value of each register and configuration information of each segment register in the context information from the physical descriptor structure are respectively synchronized into a virtualization descriptor structure and a virtualization control structure corresponding to the target physical computing resource object. And the target physical computing resource object is controlled to run based on the virtualization descriptor structure, the virtualization control structure, and the extended page table, to switch the host operating system machine from the root mode to the non-root mode.

Further, optionally, the virtualization processing method provided in the embodiments of the present disclosure further includes the following steps. Whether a switching flag corresponding to the target physical computing resource object is in a pending switch state is determined before the context information is saved. And the switching flag is updated to a switching-in-progress state when the switch flag is in the pending switch state, and a first instruction to be executed upon the first entry into the non-root mode is configured, where the first instruction points to an entry address of a switching function.

Further, optionally, an operation of saving the context information of the target physical computing resource object in the root mode into the physical descriptor structure corresponding to the target physical computing resource object includes the following steps. The value of each register in the context information and a stack top address and a stack bottom address of a second stack are saved into the physical descriptor structure, where the second stack is used for enabling the target physical computing resource object to perform memory access after switching to the non-root mode. The virtualization processing method provided in embodiments of the present disclosure further includes the following steps. A second stack currently used by the target physical computing resource object is switched to the first stack, so that the virtualization layer 30 runs based on the first stack in the root mode.

Further, optionally, an operation of controlling the target physical computing resource object to run based on the virtualization descriptor structure, the virtualization control structure, and the extended page table includes the following steps. Values of special-purpose registers from the virtualization control structure and the virtualization descriptor structure are loaded. Running control information from the virtualization control structure is injected into the target physical computing resource object, and values of general purpose registers from the virtualization descriptor structure are loaded. And a mode switching instruction is executed to control the target physical computing resource object to enter the non-root mode and start running from the first instruction, and memory management and access are performed based on the extended page table during running.

Further, optionally, the virtualization processing method provided in the embodiments of the present disclosure further includes the following steps. The second stack is restored to addresses of a stack top and a stack bottom that are saved in the physical descriptor structure, and the switching flag is updated to a switching completion state.

In some optional embodiments, the virtualization processing method provided in the embodiments of the present disclosure further includes the following steps. A function calling request initiated by a target physical computing resource object is received to request calling of a switching function in a virtualization layer to perform mode switching, where the target physical computing resource object initiates the function calling request to the virtualization layer when receiving an externally sent SMP calling request. And the switching function is run based on the function calling request to perform the operation of saving the context information of the target physical computing resource object in the root mode into the physical descriptor structure corresponding to the target physical computing resource object and a subsequent operation, to perform mode switching on the physical computing resource object.

In some optional embodiments, an operation of running at least one application on at least one virtual resource provided in the non-root mode includes the following steps. A target physical computing resource is controlled to perform at least one of memory page fault management, file management, and memory swap management in the non-root mode.

Detailed implementations and beneficial effects of the steps in the virtualization processing method shown in FIG. 3 according to the embodiments of the present disclosure have been described in detail in the foregoing embodiments. Details are not described in detail herein.

It is noted that the steps of the virtualization processing method provided in the foregoing embodiments are performed by the same device, or the virtualization processing method is performed by different devices. For example, step 301 to step 302 are performed by a device. For another example, step 301 is performed by a device, step 302 is performed by a device B, and the like.

In addition, some processes described in the foregoing embodiments and the drawings include a plurality of operations that appear in a specific sequence. However, it is clearly understood that the operations are not performed in the sequence in which the operations appear in this specification or be performed in parallel. Sequence numbers of the operations, such as 301 and 302, are used for distinguishing between different operations, and do not indicate any execution sequence. In addition, these processes include more or fewer operations, and the operations are performed in sequence or in parallel. It is noted that the descriptions such as "first" and "second" in this specification are used to distinguish different messages, devices, modules, and the like, and do not represent the order of precedence, nor do they limit "first" and "second" to different types.

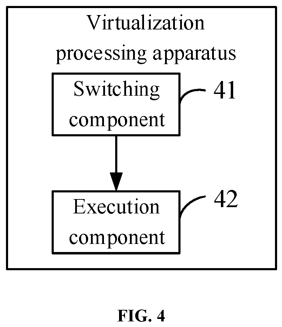

FIG. 4 is a structural schematic diagram of a virtualization processing apparatus according to some exemplary embodiments of the present disclosure. The apparatus corresponds to a virtualization layer in a physical machine, and the virtualization layer is located between hardware resources of the physical machine and a host operating system. As shown in FIG. 4, the virtualization processing apparatus includes a switching component 41 and an execution component 42.

The switching component 41 is configured to switch the host operating system from a root mode to a non-root mode.

The execution component 42 is configured to provide at least one virtual resource in the non-root mode, and run at least one application on the at least one virtual resource, where the at least one application at least includes an application that is unable to run in the host operating system in the root mode due to insufficient resources.

In some optional embodiments, the hardware resources include at least one physical computing resource object and a physical address space, the physical address space has a host physical address, and the host operating system runs on the at least one physical computing resource object. The switching component is specifically configured to create an extended page table to store a mapping relationship between a guest physical address in a non-root mode and a host physical address in a root mode; create an information bearing object required for mode switching, where the information bearing object is used for synchronizing context information between the root mode and the non-root mode; and switch the host operating system from the root mode to the non-root mode based on the information bearing object and the extended page table.

Optionally, the switching component is specifically configured to: create a page table structure corresponding to the extended page table, and apply for a root page of the extended page table from a physical address space; generate an entry address of the extended page table based on the host physical address of the root page, and add the entry address to the page table structure; and create a multi-level extended page table based on an address range of the physical address space and a page granularity used for mapping the guest physical address to the host physical address.

Further, optionally, the switching component is specifically configured to: establish, for a first address space, a first mapping relationship between the guest physical address and the host physical address at a first page granularity, and create a multi-level extended page table corresponding to the first address space based on the first mapping relationship; establish, for an input/output (IO) address space in a second address space, a second mapping relationship between the guest physical address and the host physical address at a second page granularity, and create a multi-level extended page table corresponding to the IO address space based on the second mapping relationship, where the second address space is greater than the first address space, and the second page granularity is greater than the first page granularity.

Further, optionally, the virtualization processing apparatus further includes: an establishing component and a creating component. The establishing component is configured to establish, for a memory address space in the second address space, a third mapping relationship between the guest physical address and the host physical address at a third page granularity. The creating component is configured to create a multi-level extended page table corresponding to the memory address space based on the third mapping relationship, where the third page granularity is less than the second page granularity.

Further, optionally, the virtualization processing apparatus further includes: an obtaining component, a division component, and an adding component. The obtaining component is configured to obtain, when the memory address space includes an APIC page having a fourth page granularity, a first physical page having a third page granularity to which the APIC page belongs and a target extended page table corresponding to the first physical page, where the third page granularity is greater than the fourth page granularity. The division component is configured to divide the first physical page into a plurality of sub-pages having the fourth page granularity. The adding component is configured to add a next-level extended page table below the target extended page table, where the next-level extended page table is used for storing host physical addresses of the plurality of sub-pages obtained through division.

In some optional embodiments, the switching component is specifically configured to: create a physical descriptor structure for each physical computing resource object, where the physical descriptor structure is used for saving context information of this physical computing resource in a root mode during mode switching; create and initialize a virtualization descriptor structure for each physical computing resource object, where the virtualization descriptor structure is used for synchronizing the context information in the physical descriptor structure during the mode switching; and create and initialize a virtualization control structure for each physical computing resource object, where the virtualization control structure is used for saving running state information and running control information of this physical computing resource object in the non-root mode.

In some optional embodiments, the creating component is further configured to create a first stack and an IO bitmap, where the first stack is used for enabling the virtualization layer to perform memory access in a root mode, the IO bitmap is used for recording an access permission of each physical computing resource object for each IO port in a non-root mode, and the access permission is associated with IO control information in the running control information.

In some optional embodiments, the switching component is specifically configured to: save, in response to performing mode switching on a target physical computing resource object, context information of the target physical computing resource object in the root mode into a physical descriptor structure corresponding to the target physical computing resource object; respectively synchronize a value of each register and configuration information of each segment register in the context information from the physical descriptor structure into a virtualization descriptor structure and a virtualization control structure corresponding to the target physical computing resource object; and control the target physical computing resource object to run based on the virtualization descriptor structure, the virtualization control structure, and the extended page table, to switch the host operating system machine from the root mode to the non-root mode.

Further, optionally, the virtualization processing apparatus further includes a determining component, an updating component, and a configuration component. The determining component is configured to determine whether a switching flag corresponding to a target physical computing resource object is in a pending switch state before the context information is saved. The updating component is configured to update the switching flag to a switching-in-progress state when the switch flag is in the pending switch state. The configuration component is configured to configure a first instruction to be executed upon the first entry into the non-root mode.

Further, optionally, the switching component is specifically configured to: save the value of each register in context information and a stack top address and a stack bottom address of a second stack into the physical descriptor structure, where the second stack is a stack currently used by a target physical computing resource object and also is a stack used by the target physical computing resource object after switching to a non-root mode, for the target physical computing resource object to perform memory access after switching to the non-root mode. The switching component is further configured to switch the second stack currently used by the target physical computing resource object to the first stack, for the virtualization layer to run based on the first stack in the root mode.

Further optionally, the switching component is specifically configured to: load values of special-purpose registers from the virtualization control structure and the virtualization descriptor structure; inject running control information from the virtualization control structure into the target physical computing resource object, and load values of general purpose registers from the virtualization descriptor structure; and execute a mode switching instruction to control the target physical computing resource object to enter the non-root mode and start running from the first instruction, and perform memory management and access based on the extended page table during running.

Further, optionally, the virtualization processing apparatus further includes a saving component and an updating component. The saving component is configured to restore the second stack to addresses of a stack top and a stack bottom that are saved in the physical descriptor structure. The updating component is configured to update the switching flag to a switching completion state.

In some optional embodiments, the virtualization processing apparatus further includes a receiving component and a processing component. The receiving component is configured to: receive a function calling request initiated by a target physical computing resource object to request calling of a switching function in a virtualization layer to perform mode switching, where the target physical computing resource object initiates the function calling request to the virtualization layer when receiving an externally sent SMP calling request. The processing component is configured to run the switching function based on the function calling request to perform an operation of saving the context information of the target physical computing resource object in the root mode to the physical descriptor structure corresponding to the target physical computing resource object and a subsequent operation, to perform mode switching on the physical computing resource object.

In some optional embodiments, the execution component is specifically configured to: control a target physical computing resource to perform at least one of memory page fault management, file management, and memory swap management in a non-root mode.

Detailed implementations and beneficial effects of the steps in the apparatus shown in FIG. 4 according to the embodiments of the present disclosure have been described in detail in the foregoing embodiments. Details are not described in detail herein.

Correspondingly, some embodiments of the present disclosure further provide a computer-readable storage medium storing a computer program. The computer program, when executed, implements the steps that are performed by an electronic device in the foregoing method embodiments shown in FIG. 3.

The memory is implemented by any type of volatile or non-volatile storage devices or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic disk, or an optical disc.

The foregoing communication component is configured to facilitate wired or wireless communication between a device in which the communication component is located and another device. The device in which the communication component is located accesses a wireless network based on a communication standard, such as a mobile communication network such as WiFi, 2G, 3G, 4G/LTE, 5G, or the like, or a combination thereof. In some exemplary embodiments, the communication component receives a broadcast signal or broadcast-related information from an external broadcast management system through a broadcast channel. In some exemplary embodiments, the communication component further includes a near field communication (NFC) module to promote short range communication. For example, the NFC module is implemented based on a radio frequency identification (RFID) technology, an infrared data association (IrDA) technology, an ultra wide band (UWB) technology, a Bluetooth (BT) technology, and another technology.

The foregoing display includes a screen, and the screen includes a liquid crystal display (LCD) and a touch panel (TP). When the screen includes the touch panel, the screen is implemented as a touch screen, to receive an input signal from a user. The touch panel includes one or more touch sensors to sense touch, sliding, and gestures on the touch panel. The touch sensor not only senses a boundary of a touching or sliding operation, but also detects a duration and a pressure related to the touching or sliding operation.

The foregoing power supply component provides power to various components of a device in which the power supply component is located. The power supply component includes a power supply management system, one or more power supplies, and other components associated with generation, management, and power distribution for the device in which the power supply component is located.

The foregoing audio component is configured to output and/or input an audio signal. For example, the audio component includes a microphone (MIC). When the device in which the audio component is located is in an operation mode, such as a call mode, a record mode, and a speech recognition mode, the microphone is configured to receive an external audio signal. The received audio signal is further stored in a memory or sent through a communication component. In some embodiments, the audio component further includes a loudspeaker configured to output an audio signal.

A person having ordinary skill in the art understands that the embodiments of the present disclosure are provided as a method, a system, or a computer program product. Therefore, the present disclosure takes the form of a complete hardware embodiment, a complete software embodiment, or an embodiment combining software and hardware. In addition, the present disclosure is in the form of a computer program product implemented on one or more computer-readable storage media (including but not limited to a magnetic disk memory, a compact disc read-only memory (CD-ROM), an optical memory, or the like) that include computer-usable program code.

The present disclosure is described with reference to the flowcharts and/or block diagrams of the virtualization processing method, the device (system), and the computer program product in embodiments of the present disclosure. It is understood that each process and/or block in the flowcharts and/or the block diagrams and a combination of the process and/or the block in the flowcharts and/or the block diagrams is implemented through computer program instructions. These computer program instructions is provided to a general-purpose computer, a dedicated computer, an embedded processor, or a processor of another programmable data processing apparatus to generate a machine, so that the instructions executed by the computer or the processor of the another programmable data processing apparatus generate an apparatus for implementing a specific function in one or more processes in the flowcharts and/or in one or more blocks in the block diagrams.

The computer program instructions are also stored in a computer-readable memory that directs the computer or the another programmable data processing device to operate in a specific manner, so that the instructions stored in the computer-readable memory generate a product that includes an instruction apparatus. The instruction apparatus implements functions specified in one or more processes in the flowcharts and/or in one or more blocks in the block diagrams.

The computer program instructions are also loaded onto a computer or another programmable data processing device, so that a series of operations and steps are performed on the computer or the another programmable device to generate a computer-implemented process. Therefore, the instructions executed on the computer or the another programmable device provide steps for implementing functions specified in one or more processes in the flowcharts and/or in one or more blocks in the block diagrams.

In a typical configuration, a physical machine includes one or more central processing units (CPUs), an input/output interface, a network interface, and a memory.

It is further noted that the terms "include", "comprise", or any variants thereof are intended to cover a non-exclusive inclusion. Therefore, a process, method, article, or device that includes a series of elements not only includes such elements, but also includes other elements not specified expressly, or includes inherent elements of the process, method, article, or device. Without more limitations, an element defined by a statement "include a/an ..." does not exclude presence of other identical elements in the process, the virtualization processing method, the commodity, or the device that includes the element.

The foregoing is the embodiments of the present disclosure and is not intended to limit the present disclosure. For a person having ordinary skill in the art, various modifications and variations are made to the present disclosure. Any modification, equivalent replacement, and improvement made within the spirit and principle of the present disclosure shall fall within the scope of the claims of the present disclosure.

### Industrial applicability

The solution provided in the embodiments of the present disclosure is applied to a process in which an existing operating system that has already run, but is not configured with a related system function. For a host operating system in a running state, two running modes, that are a root mode and a non-root mode, are provided. A virtualization layer is inserted between hardware resources and the host operating system, and a virtual resource providing function is implemented at least in the virtualization layer. The virtualization layer switches the host operating system from the root mode to the non-root mode, provides at least one virtual resource in the non-root mode, and at least runs, on the at least one virtual resource, an application that is unable to run in the host operating system in the root mode due to insufficient resources. When the host operating system does not need to be reinstalled, the virtual resource providing function is flexibly implemented for the host operating system in the running state, to support running of more applications, and expand a capability of the host operating system.

## Claims

1. A virtualization processing method, applied to a virtualization layer in a physical machine, wherein the virtualization layer is located between hardware resources of the physical machine and a host operating system, and the virtualization processing method comprises:
switching the host operating system from a root mode to a non-root mode; and
providing at least one virtual resource in the non-root mode, and running at least one application on the at least one virtual resource;
wherein the at least one application at least comprises an application that is unable to run in the host operating system in the root mode due to insufficient resources.

2. The virtualization processing method according to claim 1, wherein the hardware resources comprise at least one physical computing resource object and a physical address space, the physical address space has a host physical address, and the host operating system runs on the at least one physical computing resource object; and
switching the host operating system from the root mode to the non-root mode comprises:
creating an extended page table to store a mapping relationship between a guest physical address in the non-root mode and the host physical address in the root mode;
creating an information bearing object required for mode switching, wherein the information bearing object is used for synchronizing context information between the root mode and the non-root mode; and
switching the host operating system from the root mode to the non-root mode based on the information bearing object and the extended page table.

3. The virtualization processing method according to claim 2, wherein creating the extended page table comprises:
creating a page table structure corresponding to the extended page table, and applying for a root page of the extended page table from the physical address space;
generating an entry address of the extended page table based on the host physical address of the root page, and adding the entry address to the page table structure; and
creating a multi-level extended page table based on an address range of the physical address space and a page granularity used for mapping the guest physical address to the host physical address.

4. The virtualization processing method according to claim 3, wherein creating the multi-level extended page table based on the address range of the physical address space and the page granularity used for mapping the guest physical address to the host physical address comprises:
establishing, for a first address space, a first mapping relationship between the guest physical address and the host physical address at a first page granularity, and creating a multi-level extended page table corresponding to the first address space based on the first mapping relationship; and
establishing, for an input/output (IO) address space in a second address space, a second mapping relationship between the guest physical address and the host physical address at a second page granularity, and creating a multi-level extended page table corresponding to the IO address space based on the second mapping relationship;
wherein the second address space is greater than the first address space, and the second page granularity is greater than the first page granularity.

5. The virtualization processing method according to any one of claims 2 to 4, wherein creating the information bearing object required for the mode switching comprises:
creating a physical descriptor structure for each physical computing resource object, wherein the physical descriptor structure is used for saving context information of this physical computing resource in the root mode during the mode switching;
creating and initializing a virtualization descriptor structure for each physical computing resource object, wherein the virtualization descriptor structure is used for synchronizing the context information in the physical descriptor structure during the mode switching; and creating and initializing a virtualization control structure for each physical computing resource object, wherein the virtualization control structure is used for saving running state information and running control information of this physical computing resource object in the non-root mode.

6. The virtualization processing method according to claim 5, further comprising:
creating a first stack and an IO bitmap, wherein the first stack is used for enabling the virtualization layer to perform memory access in the root mode, the IO bitmap is used for recording an access permission of each physical computing resource object for each IO port in the non-root mode, and the access permission is associated with IO control information in the running control information.

7. The virtualization processing method according to claim 6, wherein switching the host operating system from the root mode to the non-root mode based on the information bearing object and the extended page table comprises:
saving, in response to performing mode switching on a target physical computing resource object, context information of the target physical computing resource object in the root mode into a physical descriptor structure corresponding to the target physical computing resource object;
respectively synchronizing a value of each register and configuration information of each segment register in the context information from the physical descriptor structure into a virtualization descriptor structure and a virtualization control structure corresponding to the target physical computing resource object; and
controlling the target physical computing resource object to run based on the virtualization descriptor structure, the virtualization control structure and the extended page table, to switch the host operating system machine from the root mode to the non-root mode.

8. The virtualization processing method according to claim 7, further comprising:
determining whether a switching flag corresponding to the target physical computing resource object is in a pending switch state before the context information is saved; and
updating the switching flag to a switching-in-progress state when the switch flag is in the pending switch state, and configuring the first instruction to be executed upon the first entry into the non-root mode.

9. The virtualization processing method according to claim 8, wherein saving the context information of the target physical computing resource object in the root mode into the physical descriptor structure corresponding to the target physical computing resource object comprises:
saving the value of each register in the context information and a stack top address and a stack bottom address of a second stack into the physical descriptor structure, wherein the second stack is used for enabling the target physical computing resource object to perform memory access after switching to the non-root mode; and
the virtualization processing method further comprises: switching a second stack currently used by the target physical computing resource object to the first stack.

10. The virtualization processing method according to claim 9, wherein controlling the target physical computing resource object to run based on the virtualization descriptor structure, the virtualization control structure, and the extended page table comprises:
loading values of special-purpose registers from the virtualization control structure and the virtualization descriptor structure;
injecting running control information from the virtualization control structure into the target physical computing resource object, and loading values of general purpose registers from the virtualization descriptor structure; and
executing a mode switching instruction to control the target physical computing resource object to enter the non-root mode and start running from the first instruction, and performing memory management and access based on the extended page table during running.

11. A physical machine, comprising hardware resources and a host operating system that runs on the hardware resources, wherein a virtualization layer is implemented between the hardware resources and the host operating system; and
the virtualization layer is configured to switch the host operating system from a root mode to a non-root mode, provide at least one virtual resource in the non-root mode, and run at least one application on the at least one virtual resource, wherein the at least one application at least comprises an application that is unable to run in the host operating system in the root mode due to insufficient resources.

12. The physical machine according to claim 11, wherein the hardware resources comprises at least one physical computing resource object and a physical address space, the physical address space has a host physical address, and the host operating system runs on the at least one physical computing resource object; and
switching, by the virtualization layer, the host operating system from the root mode to the non-root mode comprises:
creating an extended page table to store a mapping relationship between a guest physical address in the non-root mode and the host physical address in the root mode;
creating an information bearing object required for mode switching, wherein the information bearing object is used for synchronizing context information between the root mode and the non-root mode; and
switching the host operating system from the root mode to the non-root mode based on the information bearing object and the extended page table.

13. The physical machine according to claim 12, wherein creating, by the virtualization layer, the extended page table comprises:
creating a page table structure corresponding to the extended page table, and applying for a root page of the extended page table from the physical address space;
generating an entry address of the extended page table based on the host physical address of the root page, and adding the entry address to the page table structure; and
creating a multi-level extended page table based on an address range of the physical address space and a page granularity used for mapping the guest physical address to the host physical address.

14. The physical machine according to claim 12 or 13, wherein creating, by the virtualization layer, the information bearing object comprises:
creating a physical descriptor structure for each physical computing resource object, wherein the physical descriptor structure is used for saving context information of this physical computing resource in the root mode during the mode switching;
creating and initializing a virtualization descriptor structure for each physical computing resource object, wherein the virtualization descriptor structure is used for synchronizing the context information from the physical descriptor structure during the mode switching; and
creating and initializing a virtualization control structure for each physical computing resource object, wherein the virtualization control structure is used for saving running state information and running control information of this physical computing resource object in the non-root mode.

15. The physical machine according to claim 14, wherein the virtualization layer is further configured to:
create a first stack and an IO bitmap, wherein the first stack is used for enabling the virtualization layer to perform memory access in the root mode, the IO bitmap is used for recording an access permission of each physical computing resource object for each IO port in the non-root mode, and the access permission is associated with IO control information in the running control information.

16. The physical machine according to claim 14, wherein switching, by the virtualization layer, the host operating system from the root mode to the non-root mode comprises:
saving, in response to performing mode switching on a target physical computing resource object, context information of the target physical computing resource object in the root mode into a physical descriptor structure corresponding to the target physical computing resource object;
respectively synchronizing a value of each register and configuration information of each segment register in the context information from the physical descriptor structure into a virtualization descriptor structure and a virtualization control structure corresponding to the target physical computing resource object; and
controlling the target physical computing resource object to run based on the virtualization descriptor structure, the virtualization control structure, and the extended page table, to switch the host operating system machine from the root mode to the non-root mode.

17. The physical machine according to claim 16, wherein the virtualization layer is further configured to:
determine whether a switching flag corresponding to the target physical computing resource object is in a pending switch state before the context information is saved; and
update the switching flag to a switching-in-progress state when the switch flag is in the pending switch state, and configure the first instruction to be executed upon the first entry into the non-root mode.

18. A computer-readable storage medium storing a computer program, wherein when the computer program is executed by a processor, the processor is caused to implement the steps of the virtualization processing method as claimed in any one of claims 1 to 10.
